# EUROPÄISCHE PATENTSCHRIFT

(11) **EP 1 545 280 B1**
(45) Veröffentlichungstag und Bekanntmachung des Hinweises auf die Patenterteilung: **26.12.2007**
(21) Anmeldenummer: 03798124.8
(22) Anmeldetag: 23.08.2003
(51) Int. Cl.: A47J 43/044, A47J 43/07

(54) **HANDRÜHRER ZUM BEARBEITEN VON NAHRUNGSMITTELN**
HAND STIRRER FOR PROCESSING FOODSTUFFS
BATTEUR A MAIN PERMETTANT DE TRAVAILLER DES ALIMENTS

(30) Priorität: 18.09.2002 DE 10243121
(43) Veröffentlichungstag der Anmeldung: 29.06.2005
(73) Patentinhaber: Braun GmbH, 61476 Kronberg (DE)
(72) Erfinder: LITTMANN, Ludwig, 61476 Kronberg (DE)
(86) Internationale Anmeldenummer: PCT/EP2003/009359
(87) Internationale Veröffentlichungsnummer: WO 2004/028319

(56) Entgegenhaltungen:
- DE-C- 3 815 177
- GB-A- 690 160
- US-A- 1 870 200
- US-A- 2 793 011

## Beschreibung

Die Erfindung betrifft einen Handrührer zum Bearbeiten von Nahrungsmitteln mit einem in Längsrichtung der Bearbeitungswerkzeuge, wie Schneebesen oder Knethaken, sich erstrekkendes Motorgehäuse und zweier sich im Abstand voneinander und in Längsrichtung übereinander vom Motorgehäuse weg erstreckender Arme, wovon der von den Bearbeitungswerkzeugen weiter entfernte Arm als Handgriff zum Halten des Handrührers im Betrieb und der den Bearbeitungswerkzeugen nähere Arm vorzugsweise als Stütze beim Abstellen des Handrührers auf einer Standfläche dient.

Aus der DE 38 15 177 C1 ist bereits ein Handrührer zum Bearbeiten von Nahrungsmitteln gemäß dem Oberbegriff des Patentanspruchs 1 bekannt. Auch bei diesem Handrührer verlaufen die Arbeitswerkzeuge, wie Knethaken oder Schneebesen, in Längsrichtung des Motorgehäuses, von dem sich quer ein oberer Arm, nämlich der Handgriff, und ein unterer Arm, nämlich eine Stütze, wegerstrecken. Die beiden Arme sind an ihrem freien Ende mit einem Verbindungssteg miteinander verbunden, dessen nach außen zeigende Rückfläche als Standfläche für den Handrührer dient. Sowohl der Quersteg wie die beiden Arme sind mit dem Gehäuse einteilig verbunden und aus Kunststoff gespritzt. Bei dieser Anordnung bilden die Gehäuseteile, die in der Regel aus zwei Halbschalen bestehen, eine verhältnismäßig großvolumige Ausdehnung, was die Sicht beim Bearbeiten von Nahrungsmitteln einschränken kann.

Aufgabe der Erfindung ist es daher, einen Handrührer zum Bearbeiten von Nahrungsmitteln zu schaffen, der sehr kompakt baut, materialsparend ausgebildet ist, eine gute Einsicht gewährt, gut handlich ist und ein sicheres Abstellen auf einer Arbeitsplatte ermöglicht, ohne daß die Bearbeitungswerkzeuge die Arbeitsplatte berühren.

Diese Aufgabe wird durch die Merkmale des Patentanspruchs 1 gelöst. Dadurch, daß beide Arme mit einer Abstützfläche versehen sind und der den Bearbeitungswerkzeugen nähere Arm als stabörmiges Gebilde ausgebildet ist, vereinfacht sich die Handhabung des Handrührers erheblich, weil einerseits aufgrund der besseren "Durchsichtigkeit" des Handrührers dieser leichter auf eine Arbeitsplatte abgestellt werden kann und andererseits man beim Bearbeiten von Nahrungsmitteln besser in den Topf einsehen kann, in dem Bearbeitungsmittel zerkleinert bzw. verrührt werden. Dies wird durch das erfindungsgemäße stabförmige Gebilde erreicht, das aufgrund seiner geringen Durchmesser kaum sichtbar ist. Durch die Bildung von erheblich kleineren Querschnitten am stabförmigen Gebilde wirkt der Handrührer wesentlich kompakter und kleiner, erhöht seine Funktionalität und erspart zusätzliches Kunststoffmaterial beim Spritzvorgang des Gehäuses, was auch ein einfacher auszugestaltendes Spritzwerkzeug ermöglicht. Dadurch, daß nach der Erfindung die Querschnitte des stabförmigen Gebildes verhältnismäßig gering ausgelegt sind, ist auch der Handgriff besser sichtbar und leichter zugänglich, was auch zu einer einfachen Reinigung des Handrührers, wegen des einfacheren Zugriffs von Hand, führt.

Gemäß den Merkmalen des Patentanspruchs 2 wird das stabförmige Gebilde von einem U-förmigen Bügel gebildet, wobei der die beiden Schenkel miteinander verbindende Steg neben der Abstellfläche am Handgriff die andere Abstellfläche des Handrührers bildet. Dabei kann dieser Steg so geformt sein, daß nur die den beiden Schenkeln benachbarten Abschnitte als Standfläche dienen. Die freien Enden des U-förmig verlaufenden Bügels sind am Motorgehäuse, beispielsweise durch eine Schnappverbindung, lösbar oder durch Preßsitz formschlüssig, also unlösbar, befestigt. Ein U-förmig verlaufender Bügel bringt auch eine höhere Steifigkeit mit sich, was unter anderem auch die den Bügel aufnehmenden Bohrungen am Motorgehäuse hinsichtlich der Festigkeit schont.

Durch die Merkmale des Patentanspruchs 3 kann das stabförmige Gebilde aber auch von einem einzigen Stab gebildet sein, der allerdings so am Motorgehäuse angeordnet ist, daß beim Abstellen des Handrührers dieser mit dem Handgriff eine sichere Abstellfläche bildet und dabei der Handrührer nicht umkippt. Dies ist dann gewährleistet, wenn der Schwerpunkt des Handrührers im abgestellten Zustand in den von den Standflächen umrissenen Raum fällt und dabei eine 3-Punkt-Standfläche entsteht. Vorteilhaft wird dabei der Stab von einer T-Form gebildet. Es ist aber selbstverständlich auch denkbar, daß das stabförmige Gebilde aus zwei nebeneinander angeordneten Stäben besteht, deren Standfläche mit der Standfläche des Handgriffs ein Dreieck bildet, um auch auf diese Weise einen sicheren Stand des Handrührers zu gewährleisten.

Besonders vorteilhaft ist es gemäß den Merkmalen des Patentanspruchs 4, daß das stabförmige Gebilde aus einem Metalldraht besteht. Ein Metalldraht weist eine hohe Festigkeit auf, ist biegesteif und kann daher auch im Durchmesser verhältnismäßig dünn ausgelegt sein. Hierdurch wird die Einsicht von einer Bedienungsperson über den Handrührer in einen Arbeitstopf verbessert.

Durch die Merkmale des Patentanspruchs 5 ist der Metalldraht, wie auch Kunststoff, korrosionsbeständig gegen alle im Haushalt benutzten Nahrungsmittel. Des weiteren wird durch die Anbringung eines Metalldrahts in Edelstahl die Anmutigkeit und Wertigkeit des Handrührers verbessert. Auch läßt sich ein derartiges Material äußerst einfach reinigen.

Es ist aber gemäß den Merkmalen des Patentanspruchs 6 auch möglich, einen Metalldraht mit Kunststoff zu umspritzen, so daß dadurch dieser die gleiche oder andere Farbe wie der Handrührer selbst aufweist. Dabei kann der Metalldraht aus einfachem Eisen oder sonstigem billigem Metall bestehen, da er durch den Kunststoff korrosionsgeschützt ist. Diese Ausführung trägt erheblich zur Kostenreduzierung des Handrührers bei. Durch die Merkmale des Patentanspruchs 7 wird das stabförmige Gebilde nach Montage des kompletten Handrührers in das Gehäuse dreh- und biegefest eingesetzt. Dies kann durch bekannte Schnapp-, Rast-, Preß- oder Klebeverbindungen erfolgen. Wichtig ist nur, daß der Bügel dreh- und biegefest im Gehäuse verankert ist.

Gemäß einer weiteren Ausführungsform nach Anspruch 8 wird der Bügel beim Ausspritzen des Gehäuses mit umspritzt, d.h., zumindest die freien Enden des Bügels ragen in das Spritzwerkzeug hinein und werden beim Ausformen des Gehäuses fest mit umspritzt. Eine derartige Lösung ist besonders kostengünstig und stellt eine biegesteife Verbindung zwischen dem Bügel und dem Kunststoffgehäuse dar. Dabei können die Enden in ihrer Fläche so strukturiert sein, daß ein besonders inniger Verschmelzungsprozeß des Kunststoffes mit dem Metall entsteht.

Durch die Merkmale des Patentanspruchs 9 wird gleichzeitig mit der Schaffung des Bügels die Führung des Anschlußkabels gelöst, indem dieses, nachdem es aus dem Motorgehäuse herausragt, zwischen Handgriff und Bügel geleitet wird, so daß das Anschlußkabel während des Betriebs an dem die beiden Schenkel des Bügels verlaufenden Bodenteil aufliegen kann. Dabei begrenzen die Schenkel des U-förmigen Bügels die seitliche Beweglichkeit des Anschlußkabels zusätzlich. Auf diese Weise wird das Gerätekabel beim Bearbeiten von Nahrungsmitteln von der Rührschüssel ferngehalten und dies insbesondere deshalb, weil das Anschlußkabel im wesentlichen senkrecht vom Motorgehäuse weg also im wesentlichen von der Oberfläche der Rührschüssel weggeführt wird.

Der kürzeste Weg des Verlaufs des Anschlußkabels wird nur dann erreicht, wenn das Anschlußkabel zwischen den beiden zugewandten Schenkeln des U-förmig verlaufenden Bügels aus dem Motorgehäuse austritt (Anspruch 10). Dies ist dann der Fall, wenn das Anschlußkabel auf der Seite des Motorgehäuses austritt, auf der einerseits der Handgriff und andererseits die beiden Schenkel des Bügels aus dem Gehäuse austreten.

Ein Ausführungsbeispiel der Erfindung ist in der Zeichnung dargestellt und wird im folgenden näher erläutert. Es zeigen:
- Fig. 1: einen auf einer Abstellplatte abgestellter Handrührer in Seitenansicht gemäß der Erfindung,
- Fig. 2: eine Ansicht in Richtung X auf die Unterseite des Handrührers gemäß Fig. 1 und
- Fig. 3: eine Unteransicht (im Betrieb) in Richtung Y auf den Handrührer gemäß Fig. 1.

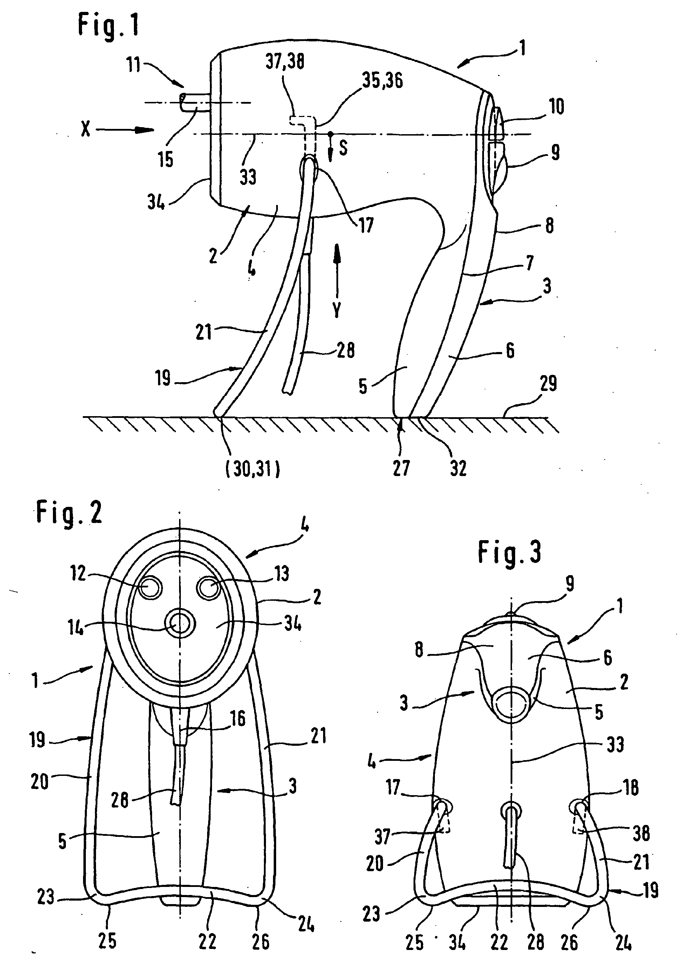

Nach den Figuren 1 bis 3 besteht der Handrührer 1 aus einem Motorgehäuse 2, an dem an seinem rechten Abschnitt gemäß Fig. 1, also im Betrieb an dem oberen Ende des Handrührers, sich quer zur Mittellinie 33 nach unten ein Handgriff 3 anschließt. Das gesamte Gehäuse 4 des Handrührers 1 wird einerseits durch das Motorgehäuse 2, ein Teil 5 des Handgriffs 3 und andererseits durch ein weiteres Teil 6 des Handgriffs 3 gebildet. Das Teil 5 bildet die untere Schale des Handgriffs 3, während das Teil 6 die obere Halbschale des Handgriffs 3 bildet. Die Teile 5 und 6 sind durch die Trennlinie 7 gemäß Fig. 1 voneinander getrennt. Das Teil 6 bildet ebenfalls einerseits ein Teil des Handgriffs 3 und andererseits ein Teil des Motorgehäuses 2, so wie dies auch beim Teil 5 der Fall ist, das einteilig mit dem Motorgehäuse 2 gespritzt ist. Die Teilung ist aus spritztechnischen Gründen notwendig.

An der Oberseite 8 des Handrührers 1 sind nach Fig. 1 und 3 einerseits Schaltelemente 9 zum Ein- und Ausschalten des Handrührers 1 und andererseits eine Auswurftaste 10 zum Auswerfen von Bearbeitungswerkzeugen 11 angeordnet. An der Unterseite 34 gemäß Fig. 1 und 2 sind am Handrührer 1 drei Aufnahmeöffnungen 12, 13, 14 vorgesehen. Die Aufnahmeöffnungen 12, 13 dienen zur Aufnahme von Schneebesen oder Knethaken, die aber hier nicht näher dargestellt sind. Die Aufnahmeöffnung 14 dient zum Ankoppeln einer Getriebeeinrichtung, mit der der Antrieb eines in einem Arbeitsbehälter (nicht dargestellt) rotierenden Messers (nicht dargestellt), beispielsweise ein Universalzerkleinerer (nicht dargestellt), kuppelbar ist, so wie dieser in dem Braun-Gesamtprogramm 2002 auf Seite 39 unter der Bezeichnung Braun MultiMix quattro pro M 880 M angeboten wird. In Fig. 1 ist lediglich ein Teil einer Schaftwelle 15 eines Schneebesens oder eines Knethakens dargestellt, der aus der Aufnahmeöffnung 13 herausragt. Die Schaftwelle 15 ist über eine Kupplung mit einer im Motorgehäuse 2 ausgebildeten Getriebeeinrichtung (nicht dargestellt) verbunden, die ihrerseits von einem elektrischen Antriebsmotor (nicht dargestellt) angetrieben wird.

Auf der dem Handgriff 3 zugewandten Seite des Motorgehäuses 2 sind nach Fig. 3 symmetrisch zur senkrechten Mittellinie 33 auf gleicher Höhe im Motorgehäuse 2 je eine Bohrung 17, 18 ausgebildet, aus denen ein stabförmiges Gebilde 19 in Form eines U-förmig ausgebildeten Bügels herausragt. Der Bügel 19 besteht im Ausführungsbeispiel aus einem runden Edelstahldraht und weist zwei in Richtung des Handgriffs 3 verlaufende Schenkel 20, 21 auf, die über einen Quersteg 22 miteinander verbunden sind. Der Quersteg 22 ist gemäß den Figuren 2 und 3 leicht in Richtung zum Motorgehäuse 2 gewölbt, so daß die zwischen dem Quersteg 22 und den Schenkeln 20, 21 gebildeten Ecken 23, 24 an ihren Außenflächen die Standflächen 25, 26 bilden. Des weiteren bildet die am freien Ende des Handgriffs 3 ausgebildete Fläche 27 die dritte Standfläche des Handrührers 1. In Fig. 1 ragen die freuen Enden 35, 36 (gestrichelt dargestellt) des Bügels 19 in das Motorgehäuse 2 hinein und sind dort verankert, beispielsweise indem die freuen Enden 35, 36 am Ende eine Abwinkelung 37, 38 aufweisen und im Motorgehäuse 2 eingespritzt sind. Hierdurch wird eine feste, biegesteife Verbindung zwischen diesen Teilen erreicht.

Gemäß den Figuren 2 und 3 ragt zwischen den beiden Bohrungen 17, 18 mittig ein elektrisches Anschlußkabel 28 heraus, an dessen freien Ende ein in der Zeichnung nicht dargestellter Stecker ausgebildet ist, über den der Handrührer 1 mit Strom versorgt werden kann, wenn der Stecker in eine elektrische Steckdose in einem Haushalt eingesetzt ist.

Wie Fig. 1 weiter zeigt, ist der Handrührer 1 in der dargestellten Stellung auf einer Stellfläche 29, beispielsweise einer Arbeitsplatte, abgestellt. Dabei stützt sich der Handrührer 1 über die Standflächen 27 und 25, 26 an der Stellfläche 29 ab. Dadurch, daß der Schwerpunkt S des Handrührers (Fig. 1) innerhalb der durch die an den Standflächen 25, 26, 27 gedachten Abstützpunkte 30, 31, 32 definierte Fläche liegt, bleibt der Handrührer in der in Fig. 1 dargestellten Lage stehen. Dabei erstrecken sich die Bearbeitungswerkzeuge 11 im wesentlichen parallel oder leicht schräg zur Abstellfläche 29, so daß diese, wenn sie mit Nahrungsmitteln behaftet sind, nicht die Abstellfläche 29 verschmutzen können.

Sowohl der Handgriff 3 wie der Bügel 19 verlaufen in Längserstreckung leicht geneigt in Richtung zu den Bearbeitungswerkzeugen 11 hin, so daß die Abstützpunkt 30, 31, 32 weiter entfernt vom Schwerpunkt S sich befinden und daher der Handrührer 1 eine bessere Standfestigkeit erhält.

Obwohl es aus den Figuren 1 bis 3 nicht ersichtlich ist, kann im Betrieb des Handrührers 1 sich das elektrische Anschlußkabel 28 an dem Quersteg 22 abstützen, so daß es nicht in die Bearbeitungswerkzeuge 11, den Arbeitsbehälter oder sonstige in Nähe der Bearbeitung liegende Teile störend eingreift.

## Patentansprüche

1. Handrührer (1) zum Bearbeiten von Nahrungsmitteln mit einem in Längsrichtung der Bearbeitungswerkzeuge (11), wie Schneebesen oder Knethaken, sich erstreckendes Motorgehäuse (2) und zweier sich im Abstand voneinander und in Längsrichtung nebeneinander angeordneten und vom Motorgehäuse (2) sich wegerstreckender Arme (3, 19), wovon der von den Bearbeitungswerkzeugen (11) weiter entfernte Arm (3) als Handgriff zum Halten des Handrührers (1) und der den Bearbeitungswerkzeugen (11) nähere Arm (19) vorzugsweise als Stütze beim Abstellen des Handrührers (1) auf einer Standfläche (29) dient,
**dadurch gekennzeichnet,**
**daß** die freien Enden beider Arme (3, 19) mit einer Abstützfläche (27, 25, 26) versehen sind und daß der dem Bearbeitungswerkzeug (11) nähere Arm (19) aus einem stabförmigen Gebilde besteht.

2. Handrührer nach Anspruch 1,
**dadurch gekennzeichnet,**
**daß** das stabförmige Gebilde aus (19) einem im wesentlichen U-förmig verlaufenden Bügel gebildet ist, dessen Enden in das Motorgehäuse (2) integriert sind.

3. Handrührer nach Anspruch 1,
**dadurch gekennzeichnet,**
**daß** das stabförmige Gebilde (19) aus mindestens einem aus dem Motorgehäuse (2) herausragenden Arm gebildet ist und daß die Größe der Standfläche von Arm und Handgriff (3) so bemessen ist, daß bei abgestelltem Handrührer (1) dessen Schwerpunkt (5) in den von den beiden Standflächen umrissenen Raum fällt.

4. Handrührer nach Anspruch 1,
**dadurch gekennzeichnet,**
**daß** das stabförmige Gebilde (19) aus einem Metalldraht besteht.

5. Handrührer nach Anspruch 4,
**dadurch gekennzeichnet,**
**daß** der Metalldraht aus nicht rostendem Edelstahl besteht.

6. Handrührer nach Anspruch 5,
**dadurch gekennzeichnet,**
**daß** der Metalldraht mit Kunststoff umspritzt ist.

7. Handrührer nach Anspruch 1,
**dadurch gekennzeichnet,**
**daß** das stabförmige Gebilde (19) im Motorgehäuse (2) dreh- und biegefest verankert ist.

8. Handrührer nach Anspruch 7,
**dadurch gekennzeichnet,**
**daß** die in das Motorgehäuse (2) hineinragenden Enden des stabförmigen Gebildes vom Motorgehäuse (2) fest umschlossen sind.

9. Handrührer nach Anspruch 2,
**dadurch gekennzeichnet,**
**daß** aus dem Motorgehäuse (2) ein elektrisches Anschlußkabel (28) herausragt und daß das Anschlußkabel durch den U-förmig verlaufenden Bügel (19) geführt ist.

10. Handrührer nach Anspruch 9,
**dadurch gekennzeichnet,**
**daß** das Anschlußkabel (28) zwischen den beiden zugewandten Schenkeln (20, 21) des U-förmig verlaufenden (19) Bügels aus dem Motorgehäuse (2) austritt.

## Claims

1. Hand mixer (1) for processing foodstuffs, having a motor housing (2) which extends in the longitudinal direction of the processing tools (11), such as whisks or dough hooks, and having two spaced-apart arms (3, 19) which are arranged one beside the other in the longitudinal direction, extend from the motor housing (2) and of which the arm (3), which is further away from the processing tools (11), serves as a handle for holding the hand mixer (1) and the arm (19), which is closer to the processing tools (11), preferably serves as a support when the hand mixer (1) is set down on a standing surface (29), **characterized in that** the free ends of the two arms (3, 19) are provided with a supporting surface (27, 25, 26), and **in that** the arm (19), which is closer to the processing tool (11), comprises a rod-like structure.

2. Hand mixer according to Claim 1, **characterized in that** the rod-like structure (19) is formed from an essentially U-shaped bracket, of which the ends are integrated in the motor housing (2).

3. Hand mixer according to Claim 1, **characterized in that** the rod-like structure (19) is formed from at least one arm projecting out of the motor housing (2), and **in that** the magnitude of the standing surface of the arm and handle (3) is such that, when the hand mixer (1) is set down, its centre of gravity (5) is located in the area defined by the two standing surfaces.

4. Hand mixer according to Claim 1, **characterized in that** the rod-like structure (19) comprises a metal wire.

5. Hand mixer according to Claim 4, **characterized in that** the metal wire consists of high-quality stainless steel.

6. Hand mixer according to Claim 5, **characterized in that** the metal wire is sheathed in plastic.

7. Hand mixer according to Claim 1, **characterized in that** the rod-like structure (19) is anchored in a rotationally fixed and flexurally rigid manner in the motor housing (2).

8. Hand mixer according to Claim 7, **characterized in that** those ends of the rod-like structure which project into the motor housing (2) are firmly encased by the motor housing (2).

9. Hand mixer according to Claim 2, **characterized in that** an electric connection cable (28) projects out of the motor housing (2), and **in that** the connection cable is routed through the U-shaped bracket (19).

10. Hand mixer according to Claim 9, **characterized in that** the connection cable (28) passes out of the motor housing (2) between the two legs (20, 21), directed towards one another, of the U-shaped bracket (19).

## Revendications

1. Batteur à main (1) permettant de travailler des aliments, avec un boîtier de moteur (2) s'étendant en direction longitudinale des outils de travail (11), comme des moussoirs ou des crochets de pétrissage, et de deux bras (3, 19) disposés à distance l'un de l'autre et à côté l'un de l'autre en direction longitudinale et s'écartant du boîtier de moteur (2), dont le bras (3) le plus éloigné des outils de travail (11) sert de poignée pour tenir le batteur à main (1) et le bras (19) proche des outils de travail (11) sert de préférence d'appui lors du dépôt du batteur à main (1) sur une surface de dépôt (29), **caractérisé en ce que** les extrémités libres des deux bras (3, 19) sont pourvues d'une surface d'appui (27, 25, 26) et **en ce que** le bras (19) le plus proche de l'outil de travail (11) est une pièce en forme de barre.

2. Batteur à main selon la revendication 1, **caractérisé en ce que** la pièce en forme de barre (19) est formée d'un étrier essentiellement en forme de U, dont les extrémités sont intégrées dans le boîtier de moteur (2).

3. Batteur à main selon la revendication 1, **caractérisé en ce que** la pièce en forme de barre (19) est formée par au moins un bras sortant du boîtier de moteur (2) et **en ce que** la grandeur de la surface de dépôt du bras et de la poignée (3) est dimensionnée de telle manière que, lorsque le batteur à main (1) est déposé, son centre de gravité (5) tombe dans l'espace entouré par les deux surfaces de dépôt.

4. Batteur à main selon la revendication 1, **caractérisé en ce que** la pièce en forme de barre (19) est constituée d'un fil métallique.

5. Batteur à main selon la revendication 4, **caractérisé en ce que** le fil métallique est composé d'acier allié inoxydable.

6. Batteur à main selon la revendication 5, **caractérisé en ce que** le fil métallique est enrobé de plastique par projection.

7. Batteur à main selon la revendication 1, **caractérisé en ce que** la pièce en forme de barre (19) est ancrée, sans rotation ni flexion, dans le boîtier de moteur (2).

8. Batteur à main selon la revendication 7, **caractérisé en ce que** les extrémités de la pièce en forme de barre pénétrant dans le boîtier de moteur (2) sont maintenues fermement par le boîtier de moteur (2).

9. Batteur à main selon la revendication 2, **caractérisé en ce qu'**un câble de raccordement électrique (28) sort du boîtier de moteur (2) et **en ce que** le câble de raccordement est guidé à travers l'étrier en forme de U (19).

10. Batteur à main selon la revendication 9, **caractérisé en ce que** le câble de raccordement (28) sort du boîtier de moteur (2) entre les deux branches opposées (20, 21) de l'étrier en forme de U (19).
